Europäisches Patentamt

European Patent Office

Office européen des brevets

(19)

(11) Veröffentlichungsnummer: **0 245 541**
**A2**

(12) **EUROPÄISCHE PATENTANMELDUNG**

(21) Anmeldenummer: **86118148.5**

(22) Anmeldetag: **30.12.86**

(51) Int. Cl.⁴: **B62J 7/02**

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

(30) Priorität: **11.04.86 DE 3612311**

(43) Veröffentlichungstag der Anmeldung:
**19.11.87 Patentblatt 87/47**

(84) Benannte Vertragsstaaten:
**AT BE CH DE ES FR GB IT LI LU NL SE**

(71) Anmelder: **KRAUSER Kraftfahrzeug-Zubehör Vertriebs-GmbH**
**Hörmannsbergerstrasse 18**
**D-8905 Mering(DE)**

(72) Erfinder: **Krauser, Michael**
**Hörmannsbergerstrasse 18**
**D-8905 Mering(DE)**

(74) Vertreter: **von Kirschbaum, Albrecht, Dipl.-Ing.**
**Hermann-Ehlers-Strasse 21a**
**D-8034 Germering(DE)**

(54) **An einem Motorradrahmen befestigbares, einteiliges Halterungsteil.**

(57) Ein an einem Motorradrahmen befestigbares, einteiliges Halterungsteil ist als ein in Seitenansicht etwa bumerangförmiges Tragelement ausgebildet, dessen beide Schenkel einen Winkel von weniger als 90° einschließen; hierbei sind auf der dem Motorradrahmen zugewandten Rückseite des Tragelements in dessen Schenkeln mehrere Ausnehmungen vorgesehen, in welche mit einer gewissen Klemmwirkung am Boden eines Motorradkoffers ausgebildete Ansätze eingreifen. Dieser straffe Sitz eines Koffers an dem Tragelement wird durch ein am hinteren Ende des Koffers angebrachtes Schloß dadurch gesichert und aufrechterhalten, daß eine am hinteren freien Ende des Tragelements vorgesehene Halterungszunge in das Schloß einrastet.

## An einem Motorradrahmen befestigbares, einteiliges Halterungsteil

Die Erfindung betrifft ein an einem Motorradrahmen befestigbares, einteiliges Halterungsteil nach dem Oberbegriff des Anspruchs 1.

In der DE-OS 32 26 445 ist ein S-oder Z-förmig ausgebildetes, einteiliges Tragteil aus glasfaserverstärktem Kunststoff dargestellt und beschrieben, das im Querschnitt ein doppel-T-förmiges Profil aufweist und am Rahmen eines Motorrads angebracht ist. Auf einem oberen, etwa waagrecht verlaufenden Schenkel des Tragteils liegt ein Motorradkoffer über eine von dessen Boden vorstehende Abwinkelung auf. Ein am (in Fahrtrichtung gesehen) vorderen, unteren Ende des Motorradkoffers angebrachtes Halteschloß rastet in eine an einem unteren Schenkel des Tragteils ausgebildete, fensterartige Öffnung ein, hierdurch ist der Koffer lösbar mit dem Tragteil und damit mit dem Motorrad selbst verbunden.

Aufgrund der Ausbildung der vom Kofferboden abragenden Abwinkelung ist der Koffer allenfalls durch leichtes Festklemmen auf dem oberen Schenkel des Tragteils gehalten und ist an diesem nur durch das an dessen vorderem unterem Ende angebrachte Schloß gehaltert. Die beim Fahren unvermeidlich auftretenden Erschütterungen aufgrund von Unebenheiten, Schlaglöchern u.ä. sowie die dadurch hervorgerufenen Schwing-und Schlingerbewegungen des Koffers müssen somit beinahe ausschließlich von dem im vorderen unteren Kofferbereich angebrachten Schloß aufgenommen und abgefan gen werden.

Da die Koffer im allgemeinen für eine Beladung mit 10 bis 15 kg zugelassen sind, was von den Benutzern erfahrungsgemäß häufig nicht unerheblich überschritten wird, ist eine schwingungsfreie und damit sichere Halterung des Koffers an und auf diesem Tragteil oft schon nach einer verhältnismäßig kurzen Benutzungsdauer nicht mehr gegeben. Noch dazu sind die aus Kunststoff hergestellten Koffer in sich keineswegs so verwindungssteif, daß sie auf die Dauer den nicht unbeträchtlichen, durch Stöße, Längs-bzw. Querschwingungen u.ä. hervorgerufenen Belastungen widerstehen können; sie verlieren vielmehr im Laufe der Zeit ihre Steifigkeit und werden dadurch instabil.

Nachteilig bei dem herkömmlichen Tragteil ist somit, daß nur am vorderen unteren Schenkel des Tragteils durch das Schloß eine kraftschlüssige Verbindung zwischen Koffer und Tragteil vorgesehen ist, da der Kofferboden lediglich im oberen Bereich mit einer Abwinkelung auf dem oberen Schenkel des Tragteils leicht klemmend aufliegt.

Aufgabe der Erfindung ist es daher, ein hochbelastbares und verwindungssteifes, am Rahmen eines Motorrads befestigbares Halterungsteil zu - schaffen welches an den unterschiedlichsten Motorradtypen befestigbar ist, und an welchem auch nach langer und häufiger Benutzung ein Koffer sicher und kraftschlüssig gehalten ist und bleibt. Ferner soll gemäß der Erfindung das Halterungsteil so ausgebildet sein, daß es mittels demjeweiligen Motorrad anpaßbaren Beschlagteilen an eine Vielzahl von Motorrädern sicher anbringbar ist.

Gemäß der Erfindung ist dies bei einem an einem Motorradrahmen befestigbaren, einteiligen Halterungsteil durch den Gegenstand ders Anspruchs 1 gelöst. Vorteilhafte Weiterbildungen der Erfindung sind in den Unteransprüchen angegeben.

Gemäß einer bevorzugten Ausführungsform der Erfindung ist das einteilige Halterungsteil als ein in Seitenansicht etwa bumerangförmiges bzw. etwa der Form des Großbuchstabens L entsprechendes Tragelement ausgebildet, dessen beide Schenkel einen Winkel von weniger als 90° einschließen, und auf dessen Innenseite in dem längeren Schenkel, ausgehend von der oberen Kante, vorzugsweise zwei Ausnehmungen ausgebildet, während in dessen kürzeren Schenkel, ausgehend von dessen innenliegender Kante vorzugsweise noch eine weitere Ausnehmung ausgebildet ist.

Um an einem solchen Tragelement einen Motorradkoffer sicher befestigen zu können, weist dieser auf der Rückseite in seinem Boden eine etwa mittig verlaufende, der Form des Tragelements in etwa entsprechende, breitere Vertiefung auf, in die Ansätze vorstehen, welche der Anordnung und Ausbildung der Ausnehmungen auf der Innenseite des Tragelements angepaßt sind. Hierbei sind sowohl die Ausnehmungen als auch die Ansätze im Längsschnitt vorzugsweise etwa trapezförmig ausgebildet.

Gemäß einer bevorzugten Ausführungsform der Erfindung ist das einteilige Tragelement am freien Ende seines längeren Schenkels in Draufsicht breiter ausgeführt und weist auf dessen Oberseite einen etwa rechteckigen Ausschnitt auf, in welchem eine um 90° schwenkbare Halterungszunge untergebracht ist. Zur Aufnahme dieser Zunge ist gemäß der Erfindung am hinteren Ende des Motorradkoffers oberhalb der in seinem Boden ausgebildeten Vertiefung ein Schloß integriert; zwischen diesem Schloß und dem Koffer ist ein Schacht ausgebidet, in welchen die in ihre vertikale Stellung geschwenkte Haltezunge einführbar und dadurch aufgenommen und gehalten ist.

Gemäß der Erfindung läßt sich an dem Tragelement ein im Bodenbereich entsprechend ausgebildeter Motorradkoffer dadurch anbringen und einhängen, daß der Koffer zuerst mit dem Ansatz, welcher der Ausnahmung im kurzen Schenkel des Tragelements entspricht, in diese Ausnehmung eingeführt und danach im Uhrzeigersinn so gedreht wird, daß nacheinander auch die beiden anderen Ansätze in die entsprechenden Ausnehmungen des längeren Schenkels des Tragelements eingeführt werden. Bei einem in das Tragelement eingehängten und an diesem gesicherten Koffer ist somit das Schloß auch bei starken Erschütterungen und den dadurch hervorgerufenen Schwingungen und Vibrationen keinen starken Beanspruchungen ausgesetzt und damit auch keinem nennenswerten Verschleiß unterworfen.

Durch diese Dreipunktaufnahme der Koffe-ransätze in die entsprechenden Tragelementaus-nehmungen und aufgrund einer auf Paßsitz dimen-sionierten Bemessung der ineinandergeführten Tei-le entsteht eine Klemmwirkung zwischen diesen Teilen und somit eine kraftschlüssige Verbindung des Koffers mit dem Tragelement.

Somit sitzt der Motorradkoffer absolut fest und spielfrei in dem am Motorradrahmen befestigten Tragelement. Auf das im Koffer integrierte Schloß wirken keine seitlichen Kräfte mehr, und es dient im wesentlichen der Diebstahlsicherung. Aufgrund der kraftschlüssigen Verbindung zwischen Koffer und Tragelement ist daher ein Lösen und ein dadurch bedingtes Verlieren des Koffers während einer Fahrt ausgeschlossen.

Um diesen festen, kraftschlüssigen Sitz des Koffers an und in dem Tragelement aufrechtzuerhalten, dient das im hinteren oberen Bereich des Koffers integrierte Schloß, mittels welchem der Koffer in Verbindung mit der hochgeklappten, d.h. in eine etwa senkrechte Stellung gebrachten Haltezunge in dieser Lage gesichert ist.

Gemäß einer weiteren vorteilhaften Ausbildung der Erfindung sind im mittleren bzw. vorderen Bereich des längeren Schenkels des Tragelements vorzugsweise noch zwei kreisförmige oder ovale Vertiefungen mit Durchbrüchen sowie nahe dem unteren, freien Ende des kürzeren Tragelementschenkels noch vorzugsweise eine weitere kreisförmige oder ovale Vertiefung mit Durchbruch ausgebildet. In diesen Durchbrüchen sind verdreh-bare und fixierbare Befestigungsscheiben aufge-nommen, von welchen auf der dem Tragelement abgewandten Seite exzentrisch angebrachte Schraubbolzen senkrecht vorstehen. Über diese Schraubbolzen sind an den Befestigungsscheiben entsprechend angeformte und ausgerichtete Beschlagteile befestigbar, über die das Tragelement mit dem Motorradrahmen verbunden und an diesem befestigt ist. Die Befestigungsscheiben selbst werden von der Außenseite des Tragelements her mittels Schraubbolzen und z.B. über Wellenscheiben in der ermittelten Stellunt fixiert. Um eine verdrehungssichere Verbindung zwischen den Befestigungsscheiben und dem Tragelement zu gewährleisten, weisen die Befestigungsscheiben auf der den exzentrisch angebrachten Bolzen abgewandten Fläche vorzugsweise eine radial verlaufende Riffelung auf.

Wenn die Befestigungsscheiben einen Durchmesser in der Größenordnung von 40 bis 50mm aufweisen, und wenn sie ferner in den ovalen Vertiefungen im Tragelement noch um etwa 20 bis 25mm verschiebbar sind, ist allein dadurch eine Variationsbreite von bis zu 70mm erreicht. Wenn dann darüber hinaus an einem oder beiden Enden der Beschlagteile noch jeweils Langlöcher in der Größenordnung von 20mm ausgebildet sind, ist eine weitere Variationsmöglichkeit in der Größenordnung von 30 bis 40mm geschaffen. Dies bedeutet dann in der Praxis, daß zur Befestigung des gemäß der Erfindung ausgebildeten Tragelements an den verschiedensten Motorradtypen nur eine verhältnismäßig geringe Anzahl von Beschlagteilen vorgesehen zu werden braucht, wodurch die Lagerhaltung sowohl beim Händler als auch beim Hersteller erheblich vereinfacht ist.

Das bumerangförmige Tragelement ist aus hochwertigem, verwindungssteifem und hochbelastbarem Chemiewerkstoff, nämlich vorzugsweise aus glasfaserverstärktem Polyamid, hergestellt. Zur Materialersparnis weist daher die Rückseite des Tragelements vorzugsweise regelmäßig ausgebildete Versteifungsstege auf, welche vorzugsweise in Form von Bienenwaben ausgebildet und entsprechend angeordnet sind. Durch die vorzugsweise Ausbildung eines Bienenwabenmusters auf der Rückseite des Tragteils ist trotz der erwähnten Materialersparnis und des dadurch bedingten geringeren Gewichts dennoch ein äußerst stabil, verwindungssteif und bruchsicher ausgeführtes Tragteil geschaffen.

Nachfolgend wird die Erfindung anhand einer bevorzugten Ausführungsform unter Bezugnahme auf die anliegenden Zeichnungen im einzelnen erläutert. Es zeigen:

Fig.1 schematisch eine perspektivische Ansicht des hinteren Teils eines Motorrads, an wel-chem ein erfindungsgemäßes Halterungsteil ange-bracht ist;

Fig.2 schematisch eine perspektivische Darstellung der Vorderseite eines Tragelementes mit ihm zugeordneten Halterungs-, Beschlag-und Befestigungsteilen;

Fig.3 eine der Fig.2 entsprechende Darstellung der Rückseite des Tragelements, und

Fig.4 schematisch eine perspektivische Darstellung der an das Tragelement nach Fig.2 und 3 angepaßten Rückseite bzw. des Bodenbereichs eines Motorradkoffers.

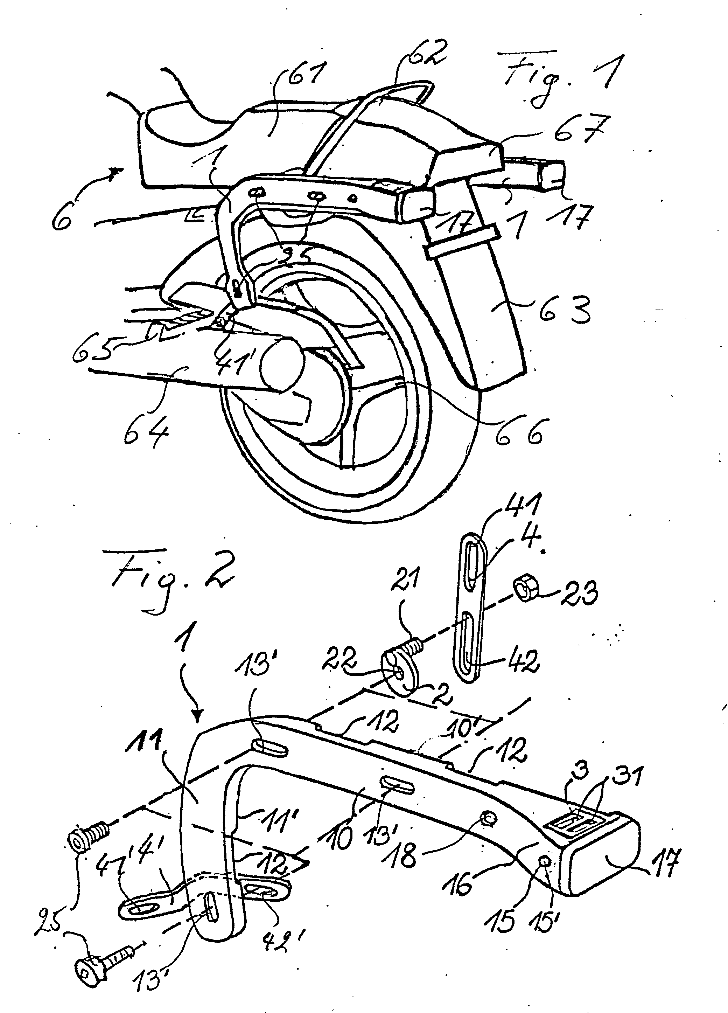

In Fig.1 ist schematisch der hintere Teil eines Motorrads 6 dargestellt, an welchem eine Sitzbank 61, ein Haltebügel 62, ein Schutzblech 63, ein Auspuff 64, eine Fußraste 65 für den Sozius, ein Hinterrad 66 sowie ein Rück-und Bremslicht 67 sowie weitere nicht näher bezeichnete und hier angeführte Teile zu erkennen sind. Etwa in Höhe des unteren Randes der Sitzbank 61 sind mittels in Fig.1 nicht erkennbarer Beschlagteile Halterungsteile in Form von bumerangförmigen Tragelementen 1 am nicht näher bezeichneten Rahmen des Motorrads 6 befestigt. Das untere freie Ende jedes Tragelements 1 ist über ein schematisch dargestelltes Beschlagteil 41' an der Fußraste 65 befestigt.

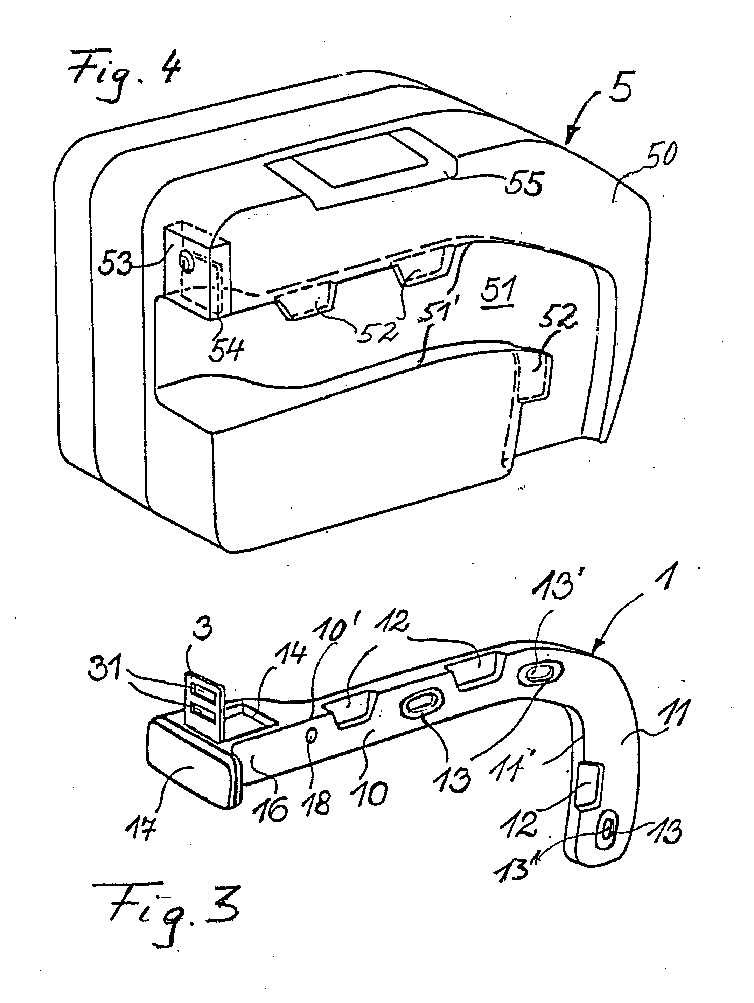

In Fig.2 ist das bumerangförmige Tragelement 1 vergrößert in perspektivischer Darstellung wiedergegeben. Das einteilige Tragelement 1 besteht aus einem langen Schenkel 10 und einem kuzren Schenkel 11, der zu dem langen Schenkel unter einem Winkel von weniger als 90° angeordnet ist. Das freie (in Fahrtrichtung gesehen) hintere Ende des langen Schenkels 10 ist in Draufsicht breiter ausgebildet; in der Verbreiterung 16 ist ein nicht näher dargestelltes Blinkergehäuse mit Reflektor untergebracht ist, welches am hinteren Ende in eine Blinkerabdeckung 17 übergeht. An der Oberseite der Verbreiterung des langen Schenkels 10 ist ein etwa rechteckiger Ausschnitt 14 (Fig.3) ausgebildet, in welchem eine Haltezunge 3 mit zwei Durchbrüchen 31 aufgenommen ist, welche um eine in einer Bohrung 15 geführte Achse 15' um 90° in die in Fig.3 wiedergegebene senkrechte Stellung verschwenkbar ist.

Im vorderen und mittleren Bereich des langen Schenkels 10 sowie am unteren freien Ende des kurzen Schenkels 11 sind insgesamt drei Längsschlitze 13' ausgebildet. Diese Längsschlitze 13' liegen, wie aus Fig.3 zu ersehen ist, mittig in drei ovalen Vertiefungen 13. Ferner sind auf der Innenseite des Tragelements 1 in dessen längeren Schenkel 10 ausgehend von dessen rückseitiger oberen Kante 10' zwei im Querschnitt vorzugsweise etwa trapezförmige Ausnehmungen 12 ausgebildet, während in dem kürzeren Schenkel 11 des Tragelements 1 an dessen rückseitiger innenliegender Kante 11' eine weitere, im Querschnitt ebenfalls etwa trapezförmige Ausnehmung 12 ausgebildet ist.

In Fig.2 ist ferner schematisch eine Befestigungsscheibe 2 dargestellt, welche eine Mittenbohrung 22 mit Innengewinde aufweist. An der Befestigungsscheibe 2 steht exzentrisch ein Schraubbolzen 21 vor. Ferner sind schematisch wiedergegebene Beschlagteile 4 und 4' dargestellt. Sowohl das Beschlagteil 4 als auch das abgewinkelte Beschlagteil 4' weisen an beiden Enden Langlöcher 41, 42 bzw. 41', 42' auf. Ferner sind in der Explosionszeichnung der Fig.2 noch Schraubbolzen 25 mit einem nicht näher bezeichneten und nur schematisch angedeuteten Sechskantimbus sowie eine Schraubmutter 23 dargestellt.

Zur Vorbereitung der Anbringung des bumerangförmigen Tragelements 1 am hinteren Teil eines Motorrads 6 werden zuerst in jede der drei oval Vertiefungen 13 die Befestigungsscheiben 2 gelegt und mittels der Schraubenbolzen 25 locker in den Vertiefungen 13 gehaltert, so daß sie (2) sowohl verdrehbar als auch in den Durchbrüchen 13's- eitlich verschiebbar sind. Dann werden Beschlagteile 4 bzw. 4' mittels Schraubmuttern 23 auf den Schraubbolzen 21 lose gehalten, so daß sie bezüglich der Schraubbolzen 21 drehbar und im Bereich der Längsschlitze 42 bzw. 42' verschiebbar sind. Die anderen Enden der Beschlagteile 4 bzw. 4' werden dann mittels nicht näher dargestellter Schraubbolzen in am Motorradrahmen vorgesehene Bohrungen mit Innengewinde bzw. an im Bereich der Fußraste 65 vorgesehene Ansätze mit Innengewinde geschraubt. Im Bereich der Fußraste 65 kann hierzu beispielsweise die Befestigungsschraube sowie der mit Innengewinde versehene Ansatz benutzt werden, welche zur Anbringung und Befestigung des Auspuffs 64 vorgesehen sind.

Das Tragelement 1 wird dann in die in Fig.1 dargestellte Lage gebracht, indem die Befestigungsscheiben 2 in den Vertiefungen 13 seitlich verschoben und so verdreht werden, daß die an den Schraubbolzen 21 gehalterten Beschlagteile 4 bzw. 4' bezüglich des Motorradrahmens entsprechend ausgerichtet sind. Sobald das Tragelement 1 provisorisch in die gewünschte Lage gebracht ist, werden nacheinander die einzelnen Sicherungsmuttern 23 sowie die Schraubbolzen 25 angezogen. Um ein Lösen sowohl der Schraubmuttern 23 als auch der Schraubbolzen 25 zu unterbinden, sind zwischen ihnen und den Beschlagteilen 4, 4' bzw. den Durchbrüchen 13' im Tragelement 1 vorzugsweise nicht näher dargestellte Wellscheiben vorgesehen.

Um die Übersichtlichkeit der Darstellung in Fig.2 nicht zu beeinträchtigen, sind nur zwei Befestigungsschrauben 25, zwei Beschlagteile 4 und 4' sowie nur jeweils eine Befestigungsscheibe 2 und eine auf deren Schraubbolzen aufzubringende Schraubmutter 23 dargestellt. Das Einführen bzw. die Zuordnung der einzelnen Teile ist in Fig.2 schematisch durch gestrichelte Linien angedeutet. Aufgrund der Ausbildung der Befestigungsscheibe 2 mit dem exzenterisch vorgesehenen Schraubbolzen 21 sowie der Längsschlitze 13' bzw. der Langlöcher 41, 41', 42 und 42' in den einzelnen Beschlagteilen 4 bzw. 4' ist eine große Variationsbreite geschaffen.

Dies hat in der Praxis den Vorteil, daß mit einer geringen Anzahl von Beschlagteilen 4 bzw. 4' in Verbindung mit den verbrehbaren und in den Längsschlitzen 13'längsverschiebbaren Befestigungsscheiben 2 das Tragelement 1 an praktisch allen derzeit verfügbaren Motorradtypen befestigt werden kann. Wenn beispielsweise die Längsschlitze 13'·in dem Tragelement 1 sowie die Langlöcher 41, 42 bzw. 41', 42' in den Beschlagteilen 4 und 4' jeweils 20 bis 25mm lang sind, und wenn ferner der Durchmesser der Befestigungscheiben 40 bis 45mm beträgt, ist bei dieser Dimensionierung eine Variationsbreite von bis zu etwa 100mm rings um die in den beiden Schenkeln 10 und 11 des Tragelements 1 vorgesehenen Durchbrüche 13' gegeben.

Wenn beispielsweise jeweils ein Tragelement 1 auf jeder Seite des Motorrads 6 angebracht ist, wie aus Fig.1 zu ersehen ist, können an den Tragelementen 1 zwei Motorradkoffer 5 eingehängt und angebracht werden. Hierzu weist der Motorradkoffer 5 auf der Rückseite im Bodenbereich 50 eine etwa mittig verlaufende Vertiefung 51 auf, welche ·in ihrer Form dem bumerangförmigen Tragelement 1 entspricht, jedoch etwas breiter als dieses ist. In die Vertiefung 51 stehen in der dargestellten Ausführungsform insgesamt drei Ansätze 52 vom hinteren, äußersten Rand 51' der Vertiefung 51 vor. Hierbei entsprechen Anordnung und Ausbildung der Ansätze 52 denjenigen der Ausnehmungen 12 im Tragelement 1 und weisen ebenso wie diese (12) einen im wesentlichen trapezförmigen Querschnitt auf.

Am (in Fahrtrichtung gesehen)·hinteren Ende des Motorradkoffers 5, welches in Fig.4 dem linken Bereich des dargestellten Koffers 5 entspricht, ist oberhalb der Vertiefung 51 ein Sicherungsschloß 53 in dem Koffer 5 integriert, wobei zwischen dem Schloß 53 und dem Kofferkörper ein Aufnahmeschacht 54 zur Aufnahme einer in die senkrechte Stellung geklappten Haltezunge 3 (siehe Fig.3) ausgebildet ist. Ferner ist im oberen Bereich des Koffers 5 ein schematisch dargestellter, umklappbarer und versenkbarer Tragbügel 55 vorgesehen.

Um den Koffer 5 in das bereits am Rahmen eines Motorrads 6 angebrachte Tragelement einzuführen, wird zuerst der in Fig.4 rechte untere Ansatz 52, dann der rechte obere Ansatz 52 (oberhalb des Bezugszeichens 51') und dann der dritte Ansatz 52 in die entsprechenden Ausnehmungen 12 des Tragelements 1 eingeführt. In Fig.3 und 4 sind jeweils die Rückseiten des Tragelements 1 und des Koffers 5 dargestellt; bezogen auf die Vorderseite der Teile 1 und 5 wird beim Einführen des Koffers 5 eine Schwenkbewegung im Uhrzeigersinn ausgeführt. Gleichzeitig wird bei dieser Schwenkbewegung des Koffers 5 die in ihre senkrechte Stellung verschwenkte Haltezunge 3 in den Aufnahmeschacht 54 eingeführt.

Beim Einführen des Koffers 5 wird durch eine entsprechende Dimensionierung ·der in Anlage und Eingriff miteinander kommenden Teile insbesondere der beiden oberen Ansätze 52 auf den Koffer 5 ein gewisser Druck ausgeübt, so daß er (5) mit seinen drei Ansätzen 52 stramm und·mit einer gewissen Spannung in den drei Ausnehmungen 12 sitzt. In dieser strammen, spielfreien Lage wird der Koffer 5 an dem Tragelement 1 dadurch gehalten, daß das Sicherungsschloß 53 in einen der beiden Durchbrüche 31 der hochgeklappten (Fig.3) Haltezunge 3 einrastet.

Dies bewirkt dann im täglichen Gebrauch, daß während der Fahrt unvermeidlich auftretende Erschütterungen, Schwing-und Schlingerbewegungen durch die in den Ausnehmungen 12 des Tragelements 1 sitzenden Ansätze 52 des Koffers abgefangen und stark gedämpft werden. Bei korrektem Einführen und Einrasten der Sicherungselemente des Schlosses 53 in den vorzugsweise tiefer liegenden Durchbruch 31 der Halterungszunge 3 dient das Schloß 53 im wesentlichen nur noch dazu, den beschriebenen satten, spielfreien und damit sicheren und festen Sitz der Ansätze 52 des Koffers 5 in den Ausnehmungen 12 des Tragelements 1 zu gewährleisten und sicherzustellen.

In Fig.2 bis 4 sind jeweils ein (in Fahrtrichtung gesehen) auf der linken Seite des Motorrads befestigbares Tragelement 1 sowie ein in dieses linksseitige Tragelement 1 ein führbarer und an diesem sicherbarer Koffer 5 dargestellt. Ein auf der rechten Motorradseite befestigbares Tragelement ist selbstverständlich ebenso wie der dazupassende Koffer spiegelbildlich zu dem dargestellten linksseitigen Tragelement bzw. dem für die linke Seite vorgesehenen Koffer 5 ausgebildet.

Aufgrund der Form der Tragelemente 1 und der in einem verhältnismäßig großen Bereich variablen Anbringung können die Tragelemente 1 so an den verschiedenen Motorradtypen angebracht werden, daß der Gesamteindruck des Motorrads in keiner Weise gestört oder nachteilig beeinflußt wird. Beispielsweise können die Tragelemente 1 im Unterschied zu der in Fig.1 wiedergegebenen Darstellung auch so angebracht werden, daß der obere Schenkel 10 der Tragelemente 1 nicht, wie dargestellt, etwa waagrecht, sondern schräg nach oben verläuft und damit beispielsweise der zum hinteren Ende des Motorrads hin schräg nach oben ansteigenden Linienführung folgt.

**Ansprüche**

1. An einem Motorradrahmen befestigbares, einteiliges Halterungsteil zum Anbringen und Haltern eines Motorradkoffers mit einer lösbaren Sicherungseinrichtung, wie einem Schloß, dadurch **gekennzeichnet**, daß das Halterungsteil als ein in Seitenansicht etwa bumerangförmiges Tragelement (1) ausgebildet ist, dessen Schenkel (10, 11) einen Winkel von weniger als 90° einschließen, und bei welchem auf der Innenseite in dem längeren Schenkel (10), ausgehend von dessen oberen Kante (10'), vorzugsweise zwei Ausnehmungen (12) und in dem kürzeren Schenkel (11), ausgehend von dessen innenliegenden Kante (11') mindestens eine weitere Ausnehmung (12) ausgebildet sind, daß der Motorradkoffer (5) auf der Rückseite in seinem Boden (50) eine etwa mittig verlaufende, der Form des Tragelements (1) entsprechende, breite Vertiefung (51) aufweist, in welche der Anordnung und Ausbildung der Ausnehmungen (12) im Tragelement (1) angepaßte Ansätze (52) vorstehen, daß am freien Ende des längeren Schenkels (10) des Tragelements (1) eine Halterungszunge (3) vorgesehen ist, und daß am hinteren Ende des Koffers (5) oberhalb der Vertiefung (51) in diesem (5) als Sicherungseinrichtung das Schloß (53) integriert ist, zwischen welchem (53) und dem Koffer (5) ein Schacht (54) zum Einführen und Aufnehmen der Halterungszunge (3) ausgebildet ist.

2. Halterungsteil nach Anspruch 1, dadurch **gekennzeichnet**, daß sowohl die Ausnehmungen (12) im Tragelement (1) als auch die in die Vertiefung (51) vorstehenden Ansätze (52) im Längsschnitt etwa trapezförmig ausgeführt sind.

3. Halterungsteil nach einem der vorhergehenden Ansprüche, dadurch **gekennzeichnet**, daß das Tragelement (1) am freien Ende seines längeren Schenkels (10) in Draufsicht breiter ausgeführt ist und auf seiner Oberseite einen etwa rechteckigen Ausschnitt (14) zur Aufnahme der um 90° verschwenkbaren Haltezunge (3) aufweist, welche in der hochgeklappten und damit vertikalen Stellung in dem zwischen Schloß (53) und Koffer (5) ausgebildeten Schacht (54) aufgenommen ist.

4. Halterungsteil nach Anspruch 1, dadurch **gekennzeichnet**, daß im mittleren bzw. vorderen Bereich des längeren Schenkels (10) vorzugsweise noch zwei kreisförmige oder ovale Vertiefungen (13) mit Durchbrüchen (13') und nahe dem unteren, freien Ende des kürzeren Schenkels (11) vorzugsweise noch eine weitere kreisförmige oder ovale Vertiefung (13) mit Durchbruch (13') zur Aufnahme von verdreh-und fixierbaren Befestigungsscheiben (2) ausgebildet sind.

5. Halterungsteil nach Anspruch 4, dadurch **gekennzeichnet**, daß von den Befestigungsscheiben (2) exzentrisch an diesen (29 angebrachte Schraubbolzen (21) senkrecht abstehen, an welchen zur Halterung des Tragelements (1) am Motorradrahmen entsprechend angeformte und ausrichtbare Beschlagteile (4) befestigbar sind, und daß die Befestigungsscheiben (2) von der Außenseite des Tragelementes (1) her mittels Schraubbolzen (25) in einer ermittelten Stellung fixierbar sind. ....

....

....

....

7. Halterungsteil nach Anspruch 6, dadurch **gekenn zeichnet**, daß die Befestigungsscheiben (2) auf der dem exzentrisch angebrachten Bolzen (21) abgewandten Fläche mit einer vorzugsweise radial verlaufenden Riffelung u.ä. versehen sind.

8. Halterungsteil nach einem der vorhergehenden Ansprüche, dadurch **gekennzeichnet**, daß das Tragelement (1) auf seiner gesamten Innenseite regelmäßig in Form eines Bienenwabenmusters angeordnete Versteifungsstege aufweist.

Fig. 1

Fig. 2

Fig. 4

Fig. 3